# FASCICULE DE BREVET EUROPEEN

(11) **EP 3 495 692 B1**
(45) Date de publication et mention de la délivrance du brevet: **21.10.2020**
(21) Numéro de dépôt: 18210087.5
(22) Date de dépôt: 04.12.2018
(51) Int. Cl.: F16H 57/04

(54) **COURONNE DE REDUCTEUR DE VITESSE A TRAIN PLANETAIRE DE TURBOMACHINE**
KRONE EINES UNTERSETZUNGSGETRIEBES MIT PLANETENSATZ FÜR STRÖMUNGSMASCHINE
TURBINE ENGINE SPEED REDUCTION RING GEAR WITH PLANETARY GEAR

(30) Priorité: 06.12.2017 FR 1761732
(43) Date de publication de la demande: 12.06.2019
(73) Titulaire: Safran Transmission Systems, 92700 Colombes (FR)
(72) Inventeur: CHARRIER, Mathieu, Jean, 77550 MOISSY CRAMAYEL (FR); MORELLI, Boris, Pierre, Marcel, 77550 MOISSY CRAMAYEL (FR); SIMON, Adrien, Louis, 77550 MOISSY CRAMAYEL (FR)
(74) Mandataire: Gevers & Orès

(56) Documents cités:
- EP-A1- 2 644 939
- FR-A1- 2 987 417
- FR-A1- 3 035 375
- US-A1- 2014 069 743

## Description

### Domaine de l'invention

La présente invention concerne le domaine des réducteurs de vitesse à train planétaire pour turbomachine en particulier d'aéronef.

### Etat de la technique

L'état de l'art comprend notamment les documents FR-A1-2 853 382, FR-A1-2 942 284, FR-A1-2 987 402, FR-A1-2 987 416, FR-A1-2 987 417, FR-A1-3 041 054, FR-A1-3 047 279, US-A1-2014069743, EP-A1-2 644 939 et FR-A1-3 035 375.

Les turbomachines actuelles, notamment les turbomachines comportant une ou plusieurs hélices soufflant un flux secondaire, comprennent un système de transmission, appelé réducteur, pour entraîner cette ou ces hélices à la bonne vitesse de rotation à partir de l'arbre de la turbine de puissance du corps primaire du moteur.

Le fonctionnement des réducteurs, en particulier sur des turbomachines avec hélice de soufflante à fort taux de dilution, nécessite un débit d'huile particulièrement important pour assurer la lubrification et le refroidissement de leurs pignons et paliers. Le débit d'huile est fonction de l'architecture et est par exemple de l'ordre de 6000 à 7000 litres par heure au décollage pour une architecture particulière.

Parmi les réducteurs utilisés, on trouve les trains planétaires et épicycloïdaux qui ont l'avantage d'offrir des taux de réduction importants de la vitesse de rotation dans des encombrements réduits.

Un tel réducteur comprend un pignon planétaire ou pignon central, appelé solaire, une couronne extérieure et des pignons satellites, appelés satellites, qui sont en prise avec le solaire et avec la couronne, le support de l'un de ces trois composants devant être bloqué en rotation pour le fonctionnement du train d'engrenages.

Lorsque le porte-satellites est fixe en rotation, le solaire et la couronne sont menant et mené, respectivement, ou inversement. Le réducteur est alors du type « planétaire ». Dans le cas inverse d'un réducteur à train épicycloïdal, la couronne extérieure est fixe en rotation et le solaire et le porte-satellites sont menants et menés. La présente invention concerne un réducteur planétaire dans lequel la couronne est mobile.

Une des problématiques de ce type de réducteur est d'assurer une bonne lubrification des engrènements du solaire et des satellites entre eux. Ces engrènements sont lubrifiés en fonctionnement par de l'huile qui est amenée par des gicleurs. Une fois lubrifiés, les engrènements projettent l'huile radialement vers l'extérieur par centrifugation pour atteindre la couronne.

La couronne comporte deux éléments annulaires coaxiaux et comportant respectivement deux dentures annulaires destinées à coopérer avec chaque satellite. Les dentures de la couronne sont du type en chevron, les dentures des éléments ayant des angles d'hélice sensiblement opposés. Les éléments annulaires de la couronne comportent des brides annulaires radialement externes de fixation des éléments entre eux ainsi qu'à un porte-couronne annulaire destiné à s'étendre autour d'au moins une partie de la couronne. Les dentures des éléments annulaires sont écartées axialement l'une de l'autre et d'un plan de joint des brides. Les dentures définissent ainsi entre elles un espace annulaire délimitée extérieurement par deux rebords annulaires de support respectif des brides.
Dans la technique actuelle, l'huile centrifugée s'écoule jusque dans cet espace et sur les rebords. Elle est ensuite évacuée radialement vers l'extérieur en passant à travers des encoches sensiblement radiales qui sont formées dans les brides au niveau de leur plan de joint.

Toutefois, en fonctionnement, du fait de la rotation de la couronne, l'huile a tendance à glisser sur les rebords de support des brides et peut avoir du mal à être évacuée par les encoches. Ces glissements sont accentués dans les phases d'accélération du réducteur et lorsque l'huile est peu visqueuse. Ce phénomène entraîne une diminution de l'efficacité d'évacuation de l'huile, qui peut avoir de nombreuses conséquences néfastes telles que la recirculation d'huile, le réchauffement de l'huile et donc potentiellement des engrènements, etc.

La présente invention propose un perfectionnement qui apporte une solution simple, efficace et économique à ce problème.

### Exposé de l'invention

L'invention concerne une couronne de réducteur planétaire pour une turbomachine, en particulier d'aéronef, ladite couronne s'étendant autour d'un axe et comportant des premier et second éléments annulaires coaxiaux et comportant respectivement deux dentures annulaires internes orientées différemment, lesdits premier et second éléments annulaires comportant en outre respectivement des première et seconde brides annulaires radialement externes de fixation desdits premier et second éléments entre eux, les dentures desdits premier et second éléments annulaires étant écartées axialement l'une de l'autre et d'un plan de joint desdites première et seconde brides, et définissant entre elles un espace annulaire délimitée extérieurement par deux rebords annulaires de support respectif desdites brides, au moins l'une des brides comportant au niveau dudit plan de joint des encoches sensiblement radiales de traversée d'huile par centrifugation, caractérisée en ce qu'elle comprend en outre une rangée annulaire de parois de rétention d'huile en saillie sur lesdits rebords dans ledit espace.

L'invention propose ainsi de limiter voire d'empêcher le glissement de l'huile sur les rebords de la couronne, au moyen des parois de rétention. En fonctionnement, sous l'effet des forces centrifuges, l'huile aura donc tendance à être empêchée de tourner avec la couronne et sera stockée dans des poches délimitées chacune par des parois adjacentes. Idéalement, chaque poche communiquera avec au moins une encoche de traversée des brides, en vue de l'évacuation de l'huile à l'extérieur de la couronne.

La couronne selon l'invention peut comprendre une ou plusieurs des caractéristiques suivantes, prises isolément les unes des autres, ou en combinaison les unes avec les autres :
- chacun desdits rebords comprend une rangée annulaire de parois de rétention d'huile, les parois d'un des desdits rebords étant alignées axialement avec les parois de l'autre des rebords ; les parois s'étendant entre les dentures sont ainsi chacune formées par une première partie ou moitié de paroi située sur un des éléments, et une seconde partie ou moitié de paroi située sur l'autre des éléments ; ceci permet de traiter la fabricabilité des couronnes indépendamment l'une de l'autre ; ces parois ou parties de paroi sont alignées et cloisonnent l'espace précité en plusieurs poches adjacentes ;
- les parois s'étendent sensiblement dans des plans parallèles audit axe ; ceci permet de garantir une bonne retenue de l'huile en fonctionnement ;
- les parois de l'un des rebords sont écartées d'un jeu axial des parois de l'autre des rebords ; ceci peut être utile pour faciliter le montage des éléments formant la couronne et éviter tout contact en fonctionnement entre les parois ; en variante, ce jeu pourrait être nul et donc inexistant ;
- les parois sont rapportées et fixées sur les premier et second éléments annulaires ; ceci permet de faciliter la fabrication des éléments ;
- les parois sont formées d'une seule pièce avec les premier et second éléments annulaires ; les parois pourraient alors être obtenues de fonderie ou réalisées par usinage ;
- lesdits rebords sont sensiblement cylindriques ; en variante, ils pourraient être tronconiques pour favoriser l'écoulement de l'huile par centrifugation radialement vers l'extérieur.

La présente invention concerne également un réducteur de vitesse à train planétaire de turbomachine, comportant une couronne telle que décrite ci-dessus.

La présente invention concerne encore une turbomachine, en particulier d'aéronef, comportant un réducteur tel que décrit ci-dessus.

### Brève description des figures

D'autres caractéristiques et avantages ressortiront de la description qui suit d'un mode de réalisation non limitatif de l'invention en référence aux dessins annexés sur lesquels :
- la figure 1 est une vue schématique en coupe axiale d'une turbomachine utilisant l'invention,
- la figure 2 est une vue schématique en coupe axiale d'un réducteur à train épicycloïdal,
- la figure 3 est une vue schématique en perspective d'un réducteur à train épicycloïdal,
- la figure 4 est une vue schématique en perspective d'un rouet et de gicleurs du réducteur de la figure 3,
- la figure 5 est une vue schématique en perspective d'un porte-satellites du réducteur de la figure 3,
- la figure 6 est une vue schématique partielle en coupe axiale d'une couronne et d'un porte-couronne d'un réducteur selon la technique antérieure,
- la figure 7 est une vue schématique partielle en perspective de la couronne de la figure 6,
- la figure 8 est un schéma illustrant le phénomène de glissement de l'huile en fonctionnement sur la couronne,
- la figure 9 est un schéma similaire à celui de la figure 9 et illustrant la solution de l'invention consistant à retenir l'huile sur la couronne au moyen de parois, et
- la figure 10 est une vue schématique partielle et en coupe axiale d'un mode de réalisation d'un réducteur selon l'invention.

### Description détaillée d'un mode de réalisation de l'invention

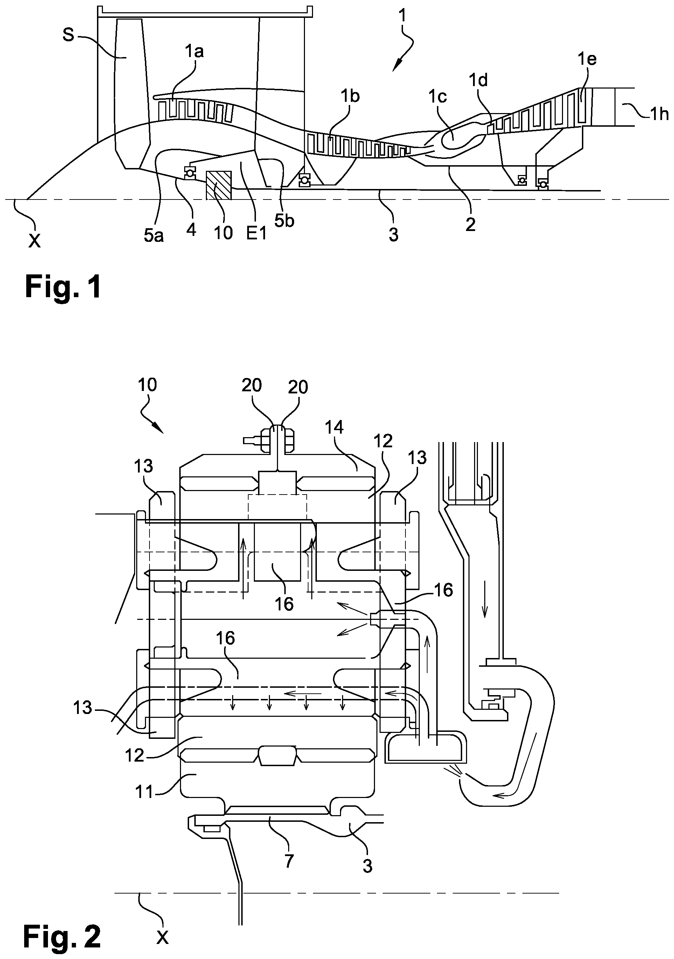

La figure 1 montre une turbomachine 1 qui comporte, de manière classique, une hélice de soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

L'hélice de soufflante S est entraînée par un arbre de soufflante 4 qui est couplé à l'arbre BP 3 au moyen d'un réducteur 10 à train planétaire

Le réducteur 10 est positionné dans la partie avant de la turbomachine. Une structure fixe comportant schématiquement, ici, une partie amont 5a et une partie aval 5b est agencée de manière à former un enceinte E1 entourant le réducteur 10. Cette enceinte E1 est ici fermée en amont par des joints au niveau d'un palier permettant la traversée de l'arbre de soufflante 4, et en aval par des joints au niveau de la traversée de l'arbre BP 3.

Dans une architecture planétaire, le porte-couronne (non représenté) est composé d'une partie plus ou moins souple qui entraîne la couronne 14 et d'une partie maintenue par des paliers et sur lequel vient se monter la soufflante S. Ces moyens de fixation sont connus de l'homme du métier et ne sont pas détaillés ici. Une brève description peut en être trouvée par exemple dans FR-A1-2 987 416.

Le réducteur 10 embraye d'une part sur l'arbre BP 3 par l'intermédiaire de cannelures 7 qui entraînent un pignon d'engrenage planétaire ou solaire 11, et d'autre part sur l'arbre de soufflante 4 qui est attaché à un porte-satellites 13. Classiquement, le solaire 11, dont l'axe de rotation X est confondu avec celui de la turbomachine, entraîne une série de pignons de satellites ou satellites 12, qui sont répartis régulièrement sur la circonférence du réducteur 10. Le nombre de satellites 12 est généralement défini entre trois et six. Les satellites 12 tournent autour de leurs axes de révolution, en engrenant sur des dentures internes de la couronne 14. Chacun des satellites 12 tourne librement autour d'un axe de satellite 16 relié au porte-satellite 13, à l'aide d'un palier qui peut être lisse, comme représenté sur la figure 2, ou un palier à éléments roulants (roulements à billes ou à rouleaux). Le porte-satellites 13 est fixe dans le cas d'un réducteur planétaire.

La rotation des satellites 12 autour de leur axe de satellite 16, du fait de la coopération de leurs pignons avec les dentures de la couronne 14, entraîne la rotation de la couronne 14 autour de l'axe X, et par conséquent celle de l'arbre de soufflante 4 qui lui est lié, à une vitesse de rotation qui est inférieure à celle de l'arbre BP 3.

La figure 2 montre l'acheminement de l'huile vers le réducteur 10 et son cheminement à l'intérieur de celui-ci. Des flèches montrent sur la figure 2 le cheminement suivi par l'huile depuis, sur cet exemple, un réservoir tampon lié à la structure fixe de la turbomachine, jusqu'aux pignons et aux paliers à lubrifier.

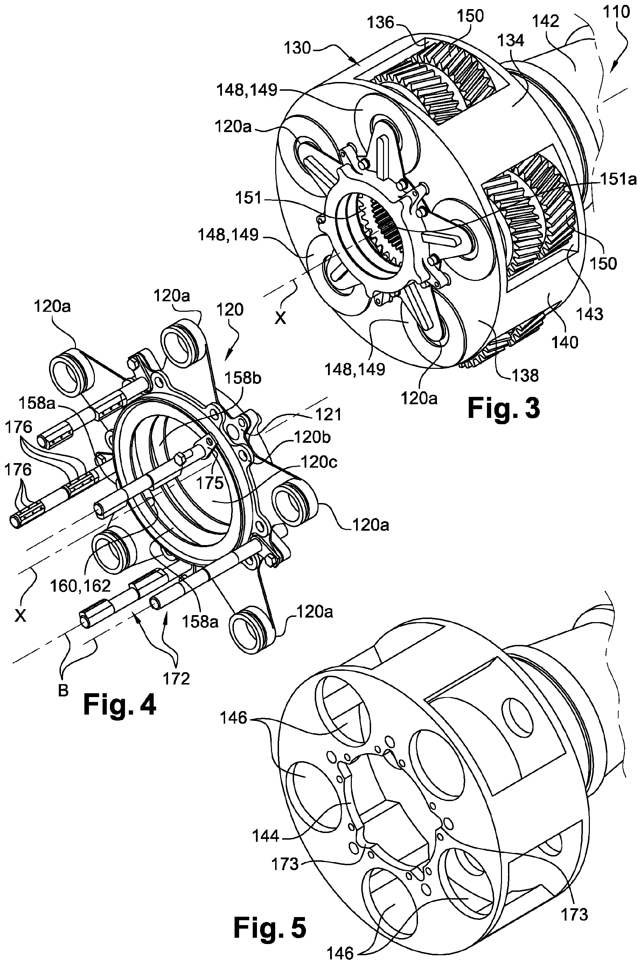

Les figures 3 à 5 illustrent un exemple plus concret d'un réducteur 110. Bien qu'il soit du type à train épicycloïdal, le réducteur 110 permet de comprendre la disposition et la coopération des pièces d'un réducteur.

La référence 130 désigne le porte-satellites du réducteur 110, qui est ici du type monobloc comprenant une partie formant une cage 134 et une partie formant un fût 142. La cage comporte deux parois annulaires 136, 138 coaxiales et reliées à leur périphérie par une paroi cylindrique 140.

La paroi annulaire 136 est solidaire du fût 142 sensiblement cylindrique, partiellement visible, comportant des moyens d'engrènement avec un disque de soufflante de la turbomachine. Les moyens d'accouplement sont par exemple des cannelures longitudinales.

Dans l'exemple représenté, la paroi cylindrique 140 est ajourée et comprend des lumières 143 traversantes en direction radiale permettant le montage des satellites.

La paroi 138 comprend une ouverture centrale 144 (permettant le montage du solaire) centrée sur l'axe X et une série d'orifices 146 régulièrement répartis autour de l'axe X, l'ouverture 144 et les orifices 146 étant traversants en direction axiale (figure 5).

Les orifices 146 servent au montage des axes 148 de rotation des satellites 150. Les axes 148 sont parallèles à l'axe X et sont montés dans la cage 134 par translation axiale en passant par les orifices 146. Ils sont fixés à leurs extrémités longitudinales sur les parois 136, 138, respectivement.

Les satellites 150 sont montés à rotation sur les axes 148 et ont leurs périphéries externes qui traversent en partie les lumières 143 en vue de leur engrènement avec la couronne externe du réducteur destinée à entourer la cage 134.

Les satellites 150 engrènent avec le solaire 151 qui comprend des cannelures rectilignes internes 151a d'accouplement à un autre arbre tel qu'un arbre de turbine.

Un rouet 120 est rapporté et fixé sur la paroi 138, du côté de sa face externe, c'est-à-dire celle qui n'est pas située du côté des satellites 150. Le rouet 120 a pour fonction de lubrifier le réducteur 110 et comprend des moyens de lubrification configurés pour amener du lubrifiant jusqu'à des gicleurs 172 et jusqu'aux axes 148 et paliers 149. L'alimentation en huile des gicleurs permet de lubrifier les dents d'engrènement des satellites 150 et du solaire 151.

Le rouet 120 a une forme générale annulaire et comprend des bras 120a en saillie radiale vers l'extérieur, au nombre de cinq dans l'exemple représenté. Le rouet 120 est destiné à être monté coaxialement sur la paroi 138 et comporte une face 120b d'appui et de fixation sur cette paroi.

Le rouet 120 comporte une ouverture centrale 120c délimitée extérieurement par une partie annulaire définissant deux gorges annulaires 158a, 158b coaxiales et disposées axialement l'une à côté de l'autre. Ces gorges 158a, 158b s'étendent autour de l'axe X et débouchent radialement vers l'intérieur. Leur paroi de fond radialement externe comprend des orifices en communication fluidique avec des canaux radiaux 160, d'une part, et des conduits radiaux 162, d'autre part.

Bien que cela ne soit pas représenté, de l'huile est destinée à être projetée dans les gorges 158a, 158b par des moyens d'alimentation en lubrifiant. Ces moyens comprennent en général une série d'injecteurs qui sont disposés autour de l'axe X et traversent les ouvertures 120c, 144. Les injecteurs sont portés par un stator et pulvérisent du lubrifiant radialement vers l'extérieur directement dans les gorges 158a, 158b, qui va ensuite s'écouler dans les canaux 160 et conduits 162.

Chacun des conduits 162 communique à son extrémité radialement externe avec une cavité d'un axe 148 en vue de l'alimentation en lubrifiant de cet axe 148 et du palier 149 associé. Le lubrifiant amené par les conduits 162 est destiné à être injecté dans les cavités, puis à s'écouler à travers les conduits précités jusqu'à la périphérie des paliers 149.

Chacun des canaux 160 communique à son extrémité radialement externe avec une extrémité longitudinale d'un gicleur 172 visible notamment à la figure 4. Les gicleurs 172 ont une forme allongée et s'étendent parallèlement à l'axe X. Leurs axes d'allongement sont notés B. Ils sont au nombre de cinq et régulièrement répartis autour de l'axe X en étant chacun disposés entre deux axes 148 adjacents.

Chaque gicleur 172 comprend des orifices 176 de projection d'huile sur les dentures des satellites 150.

Les gicleurs 172 sont fixés au rouet 120 au moyen de pattes 175 vissées, et le rouet 120 est rapporté et fixé par des vis sur la paroi annulaire 138 du porte-satellites 130.

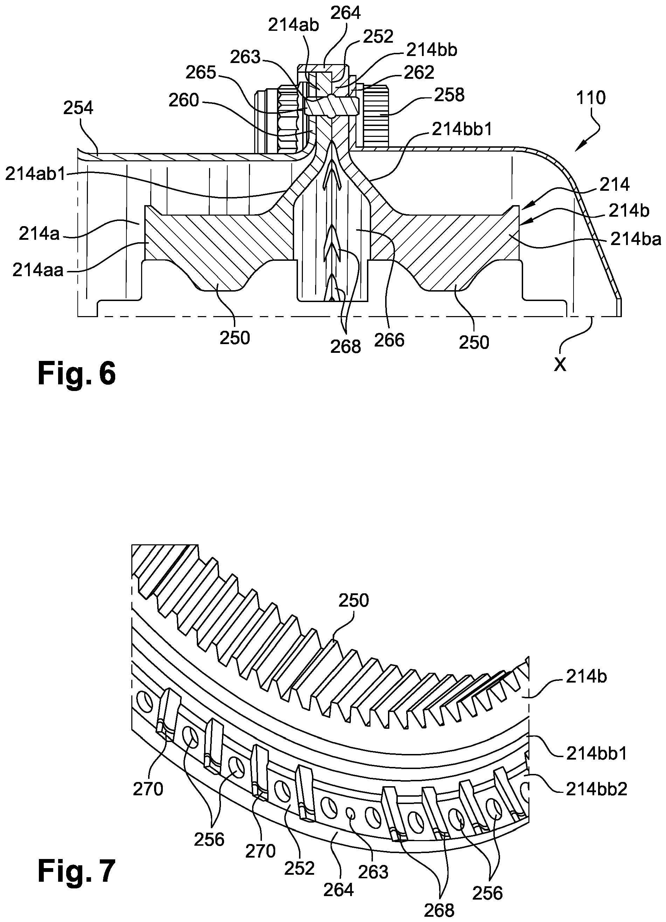

Les figures 6 et 7 montrent une couronne 214 d'un réducteur planétaire selon la technique antérieure.

La couronne 214 s'étend autour de l'axe X de la turbomachine, et comporte deux éléments annulaires coaxiaux, appelés premier élément annulaire 214a ou élément amont et second élément annulaire 214b ou élément aval.

Chaque élément 214a, 214b comprend un corps annulaire 214aa, 214ba de forme générale cylindrique et relié à une bride annulaire 214ab, 214bb s'étendant radialement vers l'extérieur.

Chaque corps 214aa, 214ba comprend une denture annulaire interne 250 à sa périphérie interne. Bien que cela ne soit pas visible sur les dessins, les dentures 250 des deux corps ou éléments, sont complémentaires des dentures des satellites, qui sont elles du type représenté à la figure 3. Les dentures 250 des éléments 214a, 214b sont en chevron.

Le corps 214aa, 214ba de chaque élément est relié par une de ses extrémités longitudinales à la bride 214ab, 214bb correspondante par l'intermédiaire d'un rebord annulaire 214ab1, 214bb1. Le corps 214aa est relié à son extrémité aval, situé du côté de l'autre corps 214ba, à la bride 214ab par le rebord 214ab1, et le corps 214ba est relié à son extrémité amont, situé du côté de l'autre corps 214aa, à la bride 214bb par le rebord 214bb1.

Chaque bride 214ab, 214bb s'étend sensiblement en direction radiale et est en appui sur l'autre bride dans un plan de joint P. Les rebords 214ab1, 214bb1 ont ici une forme générale tronconique. Le rebord 214ab1 s'étend d'amont en aval vers l'extérieur et le rebord 214bb1 s'étend d'amont en aval vers l'intérieur.

Les brides 214ab, 214bb servent à fixer les éléments 214a, 214b entre eux, ainsi qu'à un porte-couronne 254 dans l'exemple représenté.

Pour cela, les brides 214ab, 214bb comprennent chacune une rangée annulaire d'orifices axiaux traversants 256 de passage de moyens de fixation 258 du type vis-écrou ou analogues. Les orifices 256 des brides 214ab, 214bb sont alignés et reçoivent les moyens de fixation 258.

Le porte-couronne 254 comprend également une bride annulaire 260 de fixation aux brides 214ab, 214bb. La bride 260 est appliquée axialement sur l'une des brides 214ab, 214bb, à savoir ici la bride 214ab de l'élément amont 214a. La bride 214ab est ainsi intercalée axialement entre la bride 260 et la bride 214bb. L'inverse est aussi possible. Par inverse, nous entendons que le porte-couronne soit du côté droit de la couronne, ce qui représente l'arrière du moteur.

La bride 260 comprend des orifices alignés avec les orifices 256 et qui reçoivent également les moyens de fixation 258, dont des têtes peuvent être appliquées axialement sur la face aval de la bride 214bb et des écrous peuvent être appliqués axialement sur la face amont de la bride 260 ou inversement. Dans l'exemple représenté, une bride 262 d'un récupérateur annulaire d'huile est en appui axial sur la bride 214bb et reçoit sur sa face aval les têtes des écrous.

Les brides 214ab, 214bb comprennent en outre un premier jeu de trous axiaux 263 traversants et taraudés permettant le démontage du porte-couronne 254 avec la couronne 214. Un deuxième jeu de trous axiaux 263 traversants et taraudés permet de démonter l'élément 214a de l'élément 214b. Les brides 214ab, 214bb comprennent aussi au moins un pion 265 de calage angulaire des éléments 214a, 214b. Chaque bride 214ab, 214bb peut comprendre un ou plusieurs de ces trous 263, destiné(s) à être aligné(s) avec un ou plusieurs trou(s) 263 similaire(s) de l'autre partie, et à recevoir un pion de calage 265. Le pion 265 a ici une forme générale cylindrique et est orienté axialement. Il comporte un bourrelet annulaire externe, sensiblement en son milieu en direction axiale, et destiné à être situé sensiblement au niveau des surfaces 252 des brides.

La bride 214bb comprend à sa périphérie externe un rebord cylindrique de centrage 264. Ce rebord 264, qui est porté par l'élément 214b est configuré pour coopérer par glissement axial et appui radial avec la périphérie externe de l'autre élément 214a pour assurer le centrage, lors du montage et en fonctionnement, de cet autre élément 214a. En variante, l'élément 214a pourrait comprendre un tel rebord destiné à coopérer avec l'élément 214b en vue de son centrage.

Le rebord 264 est destiné à coopérer avec la périphérie externe de la bride 214ab de l'élément 214a. Au montage, le rebord 264 s'étend ainsi autour de la bride 214ab.

Dans l'exemple représenté, le rebord 264 assure également le centrage du porte-couronne 254. Le rebord 264 peut coopérer comme indiqué dans ce qui précède avec la périphérie externe de la bride 260.

Le rebord 264 s'étend ici en continu sur 360°. Il n'est ainsi pas fendu ni sectorisé. La surface de référence pour le centrage est ainsi ininterrompue.

Les rebords 214ab1, 214bb1 délimitent un espace annulaire 266 qui a ici une section de forme générale triangulaire, dont la pointe est orientée radialement vers l'extérieur.

Du fait de la forme des rebords 214ab1, 214bb1 et de leur liaison aux extrémités longitudinales, respectivement aval et amont, des corps 214a, 214b ces corps sont écartés axialement l'un de l'autre d'une distance prédéterminée.

De l'huile de lubrification est destinée à s'écouler en fonctionnement à travers l'espace inter-corps 266. Des passages sensiblement radiaux sont prévues entre les brides 214ab, 214bb afin d'autoriser l'évacuation de l'huile radialement vers l'extérieur de la couronne 214.

Les passages d'huile sont ici formés d'une part par des encoches 268 ou créneaux sensiblement radiales formées dans les surfaces 252 des brides. Chaque bride comprend une rangée annulaire d'encoches 268 alignées axialement avec des encoches 268 de l'autre des brides. Les encoches sont réalisées à distance des orifices 256 de passage des moyens de fixation 258, du trou du pion 265 ainsi que des trous 263. Chaque encoche a par exemple en section une forme semi-circulaire (demi-oblongue) ou rectangulaire comme dans l'exemple représenté (figure 7).

Les encoches 268 sont en communication fluidique, à leurs extrémités radialement internes, avec la cavité 266, et à leurs extrémités axialement externes avec des orifices de forme oblongue 270 traversants de sortie d'huile formés dans le rebord de centrage 264. Autrement dit, les passages d'huile débouchent à leurs extrémités radialement externes sur la surface cylindrique externe du rebord 264, pour y former des orifices 270 de sortie d'huile.

A l'exception du rebord 264, les éléments de couronne 214a, 214b sont symétriques par rapport à un plan médian, perpendiculaire à l'axe et passant sensiblement entre les éléments.

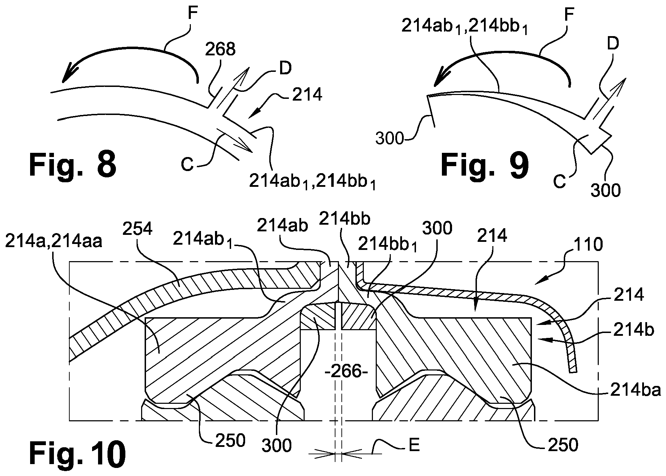

La figure 8 montre de manière très schématique le problème de glissement d'huile qui a lieu sur les rebords 214ab1, 214bb1 de support des brides du fait de la rotation de la couronne 214 en fonctionnement. Ce phénomène est accentué dans les phases d'accélération du réducteur et lorsque l'huile est peu visqueuse, et entraîne une diminution de l'efficacité d'évacuation de l'huile.

L'invention propose de contrer ce phénomène en prévoyant des parois 300 de retenue ou rétention d'huile dans l'espace inter-corps 266, au niveau des rebords 214ab1, 214bb1 de support des brides, afin d'éviter que l'huile ne soit entraînée par la couronne 214 en fonctionnement. Ce principe est illustré schématique à la figure 9 qui montre que les parois 300 définissent entre elles des poches ayant une orientation circonférentielle autour de l'axe X et conçues pour retenir l'huile de façon à faciliter ensuite son écoulement à travers les encoches 268 dans le plan de joint des brides 214ab, 214bb.

La figure 10 montre un mode de réalisation plus concret de réalisation de l'invention.

La couronne 214 selon l'invention comprend autour de l'axe X précité une rangée annulaire de parois 300 de rétention d'huile en saillie sur les rebords 214ab1, 214bb1 dans l'espace 266. Chacun des rebords 214ab1, 214bb1 comprend une rangée annulaire de parois 300 de rétention d'huile, les parois d'un des desdits rebords étant alignées axialement avec les parois de l'autre des rebords.

Dans l'exemple représenté, les parois 300 s'étendent sensiblement dans des plans parallèles à l'axe X. Les parois 300 d'un des rebords sont ici écartées d'un jeu axial E des parois de l'autre des rebords.

Dans un exemple particulier de réalisation représenté dans le dessin, les parois 300 sont rapportées et fixées sur les éléments annulaires 214a, 214b et en particulier sur les rebords 214ab1, 214bb1. En variante, les parois 300 peuvent être formées d'une seule pièce avec ces éléments.

Par ailleurs, dans l'exemple représenté, les rebords 214ab1, 214bb1 ont une forme générale sensiblement cylindrique mais pourraient avoir une forme générale tronconique comme représenté à la figure 6.

Le nombre de parois 300 par élément 214a, 214b peut être déterminé en fonction du nombre d'encoches 268 d'évacuation d'huile dans le plan de joint des brides 214ab, 214bb. Par exemple, le nombre de parois 300 peut être égal au nombre d'encoches 268 de façon à ce qu'une paroi soit associée à chaque encoche et soit positionnée de manière optimisée par rapport à cette encoche de façon à faciliter l'écoulement de l'huile en fonctionnement. Comme cela est schématiquement représenté à la figure 9, la paroi sera située juste en aval de l'encoche par rapport au sens de glissement de l'huile en fonctionnement qui est opposé au sens de rotation (flèche F) de la couronne 214.

En variante, plusieurs encoches 268 pourraient être associées à chaque poche délimitée entre deux parois 300 adjacentes, afin par exemple d'accélérer l'évacuation de l'huile de ces poches en fonctionnement et réduire ainsi leur temps de stockage au sein du réducteur.

L'invention permet de faciliter l'évacuation de l'huile, en particulier lors des phases d'accélération et lorsque l'huile est peu visqueuse. Elle permet en outre de limiter l'échauffement du réducteur et donc d'augmenter ainsi sa durée de vie.

## Revendications

1. Couronne (214) de réducteur (110) planétaire pour une turbomachine, en particulier d'aéronef, ladite couronne s'étendant autour d'un axe (X) et comportant des premier et second éléments annulaires (214a, 214b) coaxiaux et comportant respectivement deux dentures annulaires internes (250) orientées différemment, lesdits premier et second éléments annulaires comportant en outre respectivement des première et seconde brides annulaires radialement externes (214ab, 214bb) de fixation desdits premier et second éléments entre eux, les dentures desdites premier et second éléments annulaires étant écartées axialement l'une de l'autre et d'un plan de joint (P) desdits première et seconde brides, et définissant entre elles un espace annulaire (266) délimitée extérieurement par deux rebords annulaires (214ab1, 214bb1) de support respectif desdites brides, au moins l'une des brides comportant au niveau dudit plan de joint des encoches (268) sensiblement radiales de traversée d'huile par centrifugation, **caractérisée en ce qu'**elle comprend en outre une rangée annulaire de parois (300) de rétention d'huile en saillie sur lesdits rebords dans ledit espace.

2. Couronne (214) selon la revendication 1, dans laquelle chacun desdits rebords (214ab1, 214bb1) comprend une rangée annulaire de parois (300) de rétention d'huile, les parois d'un des desdits rebords étant alignées axialement avec les parois de l'autre des rebords.

3. Couronne (214) selon la revendication 1 ou 2, dans laquelle les parois (300) s'étendent sensiblement dans des plans parallèles audit axe (X).

4. Couronne (214) selon l'une des revendications précédentes, dans laquelle les parois (300) de l'un des rebords (214ab1, 214bb1) sont écartées d'un jeu axial (E) des parois de l'autre des rebords.

5. Couronne (214) selon l'une des revendications précédentes, dans laquelle les parois (300) sont rapportées et fixées sur les premier et second éléments annulaires (214a, 214b).

6. Couronne (214) selon l'une des revendications précédentes, dans laquelle les parois (300) sont formées d'une seule pièce avec les premier et second éléments annulaires (214a, 214b).

7. Couronne (214) selon l'une des revendications précédentes, dans laquelle lesdits rebords (214a, 214b) sont sensiblement cylindriques.

8. Réducteur (110) de vitesse à train planétaire de turbomachine, comportant une couronne (214) selon l'une des revendications précédentes.

9. Turbomachine, en particulier d'aéronef, comportant un réducteur (110) selon la revendication précédente.

## Patentansprüche

1. Krone (214) eines Planetengetriebes (110) für eine Turbomaschine, insbesondere eines Flugzeugs, wobei sich die Krone um eine Achse (X) erstreckt und erste und zweite koaxiale ringförmige Elemente (214a, 214b) umfasst und jeweils zwei unterschiedlich ausgerichtete ringförmige Innenverzahnungen (250) umfasst, wobei das erste und zweite ringförmige Element weiter jeweils erste und zweite radial äußere Ringflansche (214ab, 214bb) zur Befestigung des ersten und zweiten Elements aneinander umfasst, wobei die Verzahnungen des ersten und zweiten ringförmigen Elements axial voneinander und von einer Trennebene (P) des ersten und zweiten Flansches entfernt sind, und zwischen sich einen ringförmigen Raum (266) definieren, der außen durch zwei ringförmige Ränder (214ab1, 214bb1) zum jeweiligen Tragen der Flansche begrenzt ist, wobei mindestens der eine der Flansche im Bereich der Trennebene im Wesentlichen radiale Einkerbungen (268) zum Durchqueren von Öl durch Zentrifugierung umfasst, **dadurch gekennzeichnet, dass** sie weiter eine ringförmige Wandreihe (300) zum Zurückhalten von Öl auf den Rändern in den Raum hervorstehend umfasst.

2. Krone (214) nach Anspruch 1, wobei jeder der Ränder (214ab1, 214bb1) eine ringförmige Wandreihe (300) zum Zurückhalten von Öl umfasst, wobei die Wände eines der Ränder axial mit den Wänden des anderen der Ränder ausgerichtet sind.

3. Krone (214) nach Anspruch 1 oder 2, wobei sich die Wände (300) im Wesentlichen in Ebenen parallel zur Achse (X) erstrecken.

4. Krone (214) nach einem der vorstehenden Ansprüche, wobei die Wände (300) des einen der Ränder (214ab1, 214bb1) um ein Axialspiel (E) von den Wänden von dem anderen der Ränder entfernt sind.

5. Krone (214) nach einem der vorstehenden Ansprüche, wobei die Wände (300) beigebracht und an dem ersten und zweiten ringförmigen Element (214a, 214b) befestigt sind.

6. Krone (214) nach einem der vorstehenden Ansprüche, wobei die Wände (300) aus einem einzigen Stück mit dem ersten und zweiten ringförmigen Element (214a, 214b) gebildet sind.

7. Krone (214) nach einem der vorstehenden Ansprüche, wobei die Ränder (214a, 214b) im Wesentlichen zylindrisch sind.

8. Untersetzungsgetriebe (110) mit Planetensatz für eine Turbomaschine, eine Krone (214) nach einem der vorstehenden Ansprüche umfassend.

9. Turbomaschine, insbesondere eines Flugzeugs, ein Getriebe (110) nach dem vorstehenden Anspruch umfassend.

## Claims

1. Ring gear (214) of a planetary reduction gear (110) for a turbine engine, in particular of an aircraft, said ring gear extending about an axis (X) and comprising first and second coaxial annular elements (214a, 214b) and comprising respectively two inner annular teeth (250) oriented differently, said first and second annular elements further comprising respectively first and second radially external annular flanges (214ab, 214bb) to secure said first and second elements to one another, the teeth of said first and second annular elements being axially spaced from one another and from a joint plane (P) of said first and second flanges, and defining between them an annular space (266) externally delimited by two annular rims (214ab1, 214bb1) supporting respectively said flanges, at least one of the flanges comprising at the level of said joint plane notches (268) that are substantially radial for the oil to pass through by centrifugation, **characterised in that** it further comprises an annular row of oil-retention walls (300) protruding from said rims in said space.

2. Ring gear (214) according to claim 1, wherein each one of the rims (214ab1, 214bb1) comprises an annular row of oil retention walls (300), the walls of one of said rims being axially aligned with the walls of the other of the rims.

3. Ring gear (214) according to claim 1 or 2, wherein the walls (300) extend substantially in planes that are parallel to said axis (X).

4. Ring gear (214) according to one of the preceding claims, wherein the walls (300) of one of the rims (214ab1, 214bb1) are spaced by an axial clearance (E) from the walls the other of the rims.

5. Ring gear (214) according to one of the preceding claims, wherein the walls (300) are provided and secured to the first and second annular elements (214a, 214b).

6. Ring gear (214) according to one of the preceding claims, wherein the walls (300) are formed in one piece with the first and second annular elements (214a, 214b).

7. Ring gear (214) according to one of the preceding claims, wherein said rims (214ab1, 214bb1) are substantially cylindrical.

8. Planetary reductions gear (110) of a turbine engine, comprising a ring gear (214) according to one of the preceding claims.

9. Turbine engine, in particular of an aircraft, comprising a reduction gear (110) according to the preceding claim.
